# FASCICULE DE BREVET EUROPEEN

(11) **EP 0 385 963 B1**
(45) Date de publication et mention de la délivrance du brevet: **12.05.1993**
(21) Numéro de dépôt: 90870032.1
(22) Date de dépôt: 28.02.1990
(51) Int. Cl.: F23D 14/16, F24H 1/22, F24H 1/40, F24H 1/43, F24H 8/00

(54) **Chaudière à brûleur en surface**
Heizkessel mit Brenner zur Oberflächenverbrennung
Boiler with surface combustion burner

(30) Priorité: 28.02.1989 BE 8900198
(43) Date de publication de la demande: 05.09.1990
(73) Titulaire: DISTRIGAZ S.A., B-1040 Bruxelles (BE)
(72) Inventeur: Ribesse, Jacques, B-1160 Bruxelles (BE); Emmerechts, Didier, B-1020 Bruxelles (BE); Seynhaeve, Jean-Marie, B-1348 Louvain-la-Neuve (BE)
(74) Mandataire: Plucker, Guy

(56) Documents cités:
- EP-A- 0 037 333
- WO-A-86/06155
- FR-A- 2 295 369
- GB-A- 2 167 176

## Description

L'invention concerne les chaudières à brûleur à combustion en surface pour le chauffage d'un fluide caloporteur.

L'invention s'applique aussi bien à des chaudières domestiques pour habitations et appartements qu'à des chaudières de type industriel telles que les chaudières pour la production de vapeur.

Un souci constant en matière de chaudière a toujours été de produire des calories avec un rendement thermique élevé à partir d'installations fiables et de faible encombrement.

Les chaudières à combustibles gazeux ou liquide font généralement appel à des brûleurs à injection directe, à rampe ou à bec, qui donnent une flamme longue. Celle-ci demande à pouvoir se développer sur une certaine distance, ce qui implique que les chaudières disposent d'un volume de foyer important et que les échangeurs de chaleur soient disposés à une certaine distance de la flamme. Il n'est donc pas possible de réduire notablement le volume occupé par l'ensemble foyer + échangeur de chaleur. A ce volume vient s'ajouter, de surcroît, celui nécessaire à l'isolation qui gaine l'enveloppe de la chaudière.

On connaît bien les avantages offerts d'une façon générale par les brûleurs à combustion en surface, aussi appelés brûleurs "sans flamme". De tels brûleurs sont décrits notamment dans les brevets FR-477 958, US-1 331 022, BE 901 744. Dans ce dernier brevet est décrit un brûleur en surface en forme de manchon, irradiant vers l'extérieur.

Ce type de brûleur est utilisé comme un brûleur classique placé dans une chambre de combustion de grand volume, par plusieurs unités en fonction de la puissance recherchée. La chaleur irradiée doit être vite dissipée pour éviter un échauffement excessif préjudiciable au brûleur. Celui-ci peut, en effet, devenir instable au-delà d'un certain seuil de température.

Un autre inconvénient lié à l'emploi de brûleurs de ce type, par exemple dans les chaudières, tient à leur faible durée de vie. Des tensions thermiques importantes se développent au sein des structures servant de support à la flamme. Lorsque ces structures sont réalisées au moyen de parois poreuses en matière céramique, ces tensions provoquent, à la longue, des fissures qui altèrent le bon fonctionnement du brûleur et raccourcissent sa durée de vie.

Il existe, bien sûr, des matières céramiques résistant à ces contraintes thermiques, mais leur prix, notamment en ce qui concerne les matériaux de base, est très élevé, ce qui grève le coût du brûleur.

Une solution à ce problème particulier pourrait être d'utiliser, comme support, des feutres métalliques. Ces derniers présentent cependant le désavantage de mal résister à l'oxydation ou d'être extrêmement coûteux.

La demande de brevet WO 86/06155 décrit un appareil pour chauffage de fluide, à combustion en surface, où les échangeurs sont disposés de façon centrale par rapport à un brûleur périphérique alimenté de l'extérieur vers l'intérieur utilisant une masse de particules (telle que du sable) retenue entre deux plaques de matériaux perforés ou fibreux.

Il existe une demande pour des chaudières à haut rendement, fiables et surtout peu polluantes.

Un but de l'invention est de produire une chaudière à brûleur en surface durable et de fabrication économique et aux performances stables dans le temps.

Une autre but de l'invention est de réaliser une chaudière bénéficiant d'un haut rendement énergétique où la teneur en oxyde d'azote des gaz de combustion est fortement abaissée par rapport aux chaudières conventionnelles.

Un autre but de l'invention est de réaliser une telle chaudière, dans laquelle le risque d'inflammation des gaz en amont du brûleur est pratiquement inexistant, même à régime réduit.

Un autre but de l'invention est de développer un type de chaudière nouveau, doté des avantages énumérés ci-dessus, et applicable à une grande variété de puissances nominales.

L'objet de l'invention est une chaudière destinée à être alimentée en un mélange de gaz combustible et de gaz comburant, qui comporte, à l'intérieur d'une enveloppe, un brûleur à combustion en surface en céramique poreuse et un échangeur de chaleur dans lequel peut circuler un fluide caloporteur; la chaudière est pourvue de moyens pour alimenter en un mélange de gaz combustible et de gaz comburant un espace ménagé entre l'enveloppe et la face externe du brûleur; l'échangeur de chaleur est disposé à l'intérieur du brûleur; un intervalle propre à la combustion du mélange de gaz combustible et de gaz comburant étant ménagé entre la face interne du brûleur et l'échangeur, un passage pour l'évacuation des gaz brûlés étant ménagé à l'intérieur de l'échangeur.

Dans cette chaudière, le brûleur à combustion en surface est constitué d'un corps creux en matière céramique poreuse enserrée par un frettage qui maintient ladite matière céramique sous précontrainte en compression permanente au moins dans les limites de températures atteintes dans la chaudière.

De façon avantageuse, la face externe de l'échangeur, dans son ensemble, est conformée sensiblement suivant la face interne du brûleur, l'intervalle entre ces faces respectives étant sensiblement constant.

De façon préférée, la paroi du brûleur a une perméabilité comprise entre 80 et 120 mbar/m³.s⁻¹.m² et présente, entre la surface des pores et la surface apparente de la paroi un rapport compris entre 15 et 25%.

Suivant deux formes de réalisation avantageuses, le corps creux constituant le brûleur, soit est moulé d'une pièce, soit est constitué par l'assemblage de plusieurs éléments moulés distinctement, assemblés de façon étanche et enserrés par un frettage.

De façon avantageuse, le brûleur est en forme de cylindre creux.

Dans ces types de réalisation, la matière du brûleur est maintenue en tout point en état de compression par un frettage pour éviter les fissurations dues à la dilatation thermique différentielle de la face interne et la face externe du brûleur.

De façon préférée, l'échangeur de chaleur est constitué de tubes disposés suivant l'axe du brûleur, en cage d'écureuil, entre deux collecteurs annulaires disposés dans des plans transversaux à l'axe du brûleur.

De façon avantageuse, l'échangeur de chaleur est fixé à l'enveloppe de la chaudière par un de ses collecteurs annulaires, l'autre collecteur reposant librement sur un joint élastique solidaire de l'enveloppe de la chaudière et apte à reprendre les déplacements dus à la dilatation thermique axiale de cet échangeur.

Suivant une autre forme de réalisation, l'échangeur de chaleur est constitué de tubes enroulés en spirale, l'axe de chacun de ces tubes s'inscrivant sur une surface cylindrique.

Suivant une forme d'exécution particulière, l'échangeur de chaleur est un ensemble métallique coulé comportant des chenaux de passage pour les gaz brûlés.

Suivant une forme de réalisation intéressante, la chaudière est dotée d'un récupérateur de chaleur, par exemple de type rotatif, apte à collecter une partie de l'énergie thermique des gaz brûlés passant dans le conduit de fumée et à préchauffer l'air de combustion du brûleur.

Un avantage de la chaudière suivant l'invention est qu'elle n'émet que de très faibles quantités de NOₓ (0 à 30 mg/m³) grâce, à la fois, au brûleur en surface en céramique poreuse et à la disposition judicieuse adoptée dans la chaudière.

En effet, d'une part, la combustion se développe à la surface du brûleur en céramique en nappe homogène de température uniforme et la flamme est divisée en une multitude de flammes élémentaires de niveau de température réduit et, d'autre part, le transfert de chaleur est très élevé et le temps de séjour des gaz dans la flamme en surface est réduit à un minimum. Dans la plage de fonctionnement optimale, la surface de combustion se trouve portée au rouge, ce qui implique une transmission maximum par rayonnement.

Un autre avantage est que, contrairement aux foyers traditionnels où une partie importante de l'espace entourant les flammes n'est pas utilisée, le volume délimité à l'intérieur du brûleur est utilisé de façon presque parfaite par la zone de combustion (dont l'épaisseur va de quelques millimètres à quelque deux, trois centimètres), l'échangeur de chaleur et le passage central de la cheminée d'évacuation des gaz de combustion, ce qui permet d'obtenir une compacité globale très réduite.

Un autre avantage de la chaudière à brûleur en céramique poreuse précontrainte selon l'invention est que la combinaison des phénomènes de transfert par rayonnement et par convection conduit à un coefficient de transfert global particulièrement élevé. Les performances thermiques sont donc excellentes, malgré la surface d'échange réduite pour l'échangeur.

Un point extrêmement avantageux est que le brûleur participe à sa propre isolation thermique; les qualités isolantes de la matière céramique poreuse et le choix judicieux de sa porosité éliminent également tout risque de prise de feu dans la chambre d'alimentation et confèrent à la chaudière à la fois sécurité de fonctionnement et propriété d'isolation thermique vis-à-vis de l'ambiance.

Un autre avantage tient dans le faible coût la chaudière dont les dimensions de tous les organes sont réduites, à performance équivalente, par rapport à une chaudière classique, et dont le brûleur grâce au frettage est réalisé en une matière céramique peu onéreuse et aux performances stables dans le temps. En outre, les essais montrent qu'il est possible de faire fonctionner le brûleur de la chaudière de façon stable dans une très large plage de fonctionnement (par exemple, dans un rapport de 1 à 2,5) alors que d'autres brûleurs en surface ne disposent que d'une plage très réduite, c'est-à-dire qu'ils ne peuvent, en pratique, fonctionner que par tout ou rien.

Un autre avantage est que, du fait de la sécurité offerte par le système d'alimentation, l'air de combustion peut parfaitement être préchauffé jusqu'à une température de 200°C, sans risque d'inflammation intempestive en amont du brûleur.

Un autre avantage est que la chaudière peut être montée dans une position quelconque sans que son fonctionnement en soit perturbé.

D'autres particularités et avantages de l'invention ressortiront de la description d'une forme de réalisation particulière de l'invention, décrite ci-après, référence étant faite aux dessins annexés, dans lesquels :
la Fig. 1 est une vue en perspective d'une chaudière suivant l'invention avec arrachement partiel de la face avant;
la Fig. 2 est une vue en perspective d'un corps creux cylindrique constituant le brûleur;
la Fig. 3 est une vue avec arrachement partiel d'un autre mode de réalisation de l'échangeur de chaleur suivant l'invention réalisé par moulage;

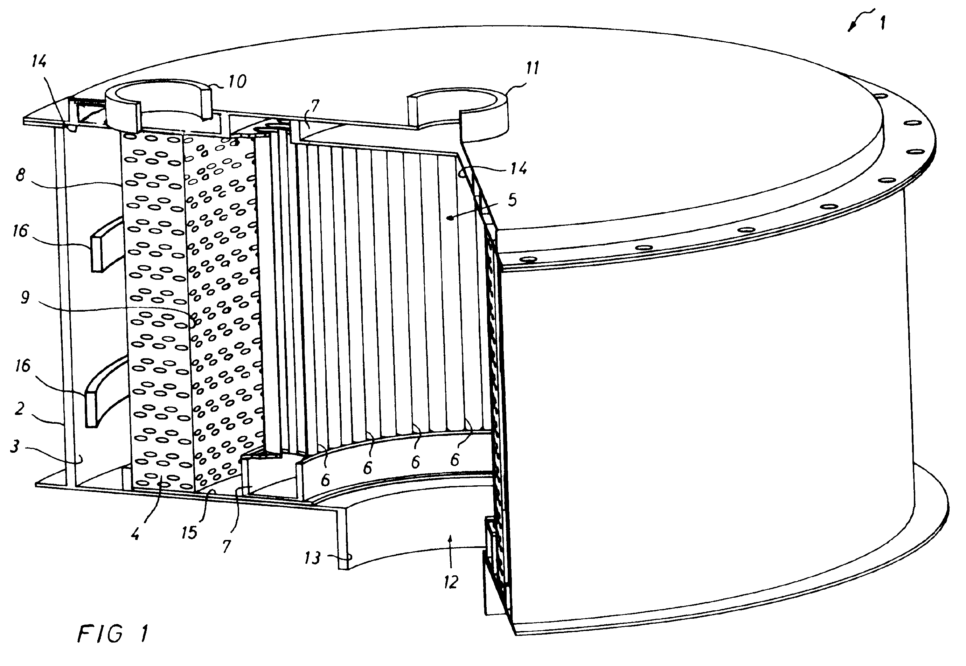

La Fig. 1 montre une dorme de réalisation d'une chaudière suivant l'invention.

La chaudière 1, dans son ensemble, est enfermée dans une enveloppe 2. Un espace 3 est ménagé entre l'enveloppe 2 et le brûleur 4 en matière céramique poreuse.

Un échangeur de chaleur 5, conformé suivant la face interne du brûleur, est disposé à l'intérieur de celui-ci. Dans l'exemple ici décrit, cet échangeur 5 comporte des tubes 6 disposés parallèlement à l'axe du brûleur 1 entre deux anneaux collecteurs 7.

La chaudière comprend des moyens (non représentés) pour alimenter, en un mélange de gaz combustible et de gaz comburant, l'espace 3 compris entre l'enveloppe 2 et le brûleur 4. Le mélange de gaz traverse ainsi le brûleur 4 de sa face externe 8 vers sa face interne 9, la combustion ayant lieu à proximité immédiate de cette face interne 9.

L'alimentation du mélange de gaz entre l'enveloppe 2 et le brûleur 4 assure une bonne isolation thermique de la chaudière 1. La face externe 8 du brûleur 4 est continuellement refroidie par le mélange de gaz qui la traverse; la paroi cylindrique de l'enveloppe 2 est maintenue à une température proche de celle du mélange de gaz introduit.

L'échangeur 5 est disposé très près de la face interne 9 du brûleur 4, ce qui est rendu possible par le fait qu'il s'agit d'un brûleur en surface. L'échangeur 5 est ainsi soumis à un flux de chaleur (transmise par convection et rayonnement) dont la densité est proche de celle émise par le brûleur. Cette chaleur est évacuée en faisant circuler un fluide caloporteur avec un débit approprié dans l'échangeur 5. Un jeu de chicanes (non représentées) détermine des circuits de circulation de fluide caloporteur dans les différents tubes 6 raccordés entre eux en séries parallèles.

Des moyens de raccordement 10, 11 permettent de relier la chaudière 1 à un circuit d'utilisation extérieur (non représenté).

Au centre de l'échangeur 5 s'étend un passage 12 communiquant avec un conduit de fumée 13 par lequel les gaz de combustion peuvent s'échapper. Les gaz sont refroidis et perdent donc leur volume à mesure qu'ils progressent vers le passage central 12 qui constitue la partie la plus resserrée de la chaudière 1.

Une plaque 14 soutient le brûleur 4 et l'échangeur 5 à une de leurs extrémités. A son autre extrémité, l'échangeur 5 n'est pas maintenu rigidement, mais repose sur un joint compressible 15. Ce joint 15 reprend les mouvements de l'échangeur 5 dus à la dilatation des tubes 6 et empêche les gaz de combustion de passer sous l'anneau collecteur 7 de l'échangeur 5, forçant ainsi la totalité du débit gazeux à traverser radialement l'échangeur 5. Un joint du même type retient le brûleur par rapport à l'enveloppe 2. Des frettes 16, faites ici de cerceaux d'acier, enserrent la céramique constituant le brûleur 4, ce frettage permet de neutraliser les tensions de traction qui se développent à la face extérieure 8 du brûleur 4 sous l'influence du gradient de température.

En effet, la face cave du brûleur en céramique étant plus chaude que la face bombée, il s'ensuit des tensions telles qu'une céramique de qualité normale ne pourrait les supporter sans se fendre ou s'effriter.

Grâce à l'action des frettes qui la maintiennent en précontrainte permanente, on peut utiliser dans les conditions de travail, une qualité de céramique très courante et donc de coût très réduit.

Pour des dimensions de chaudières importantes, on peut envisager de réaliser le support de flamme au moyen d'assemblage de pièces céramiques, à condition qu'elles soient jointes de façon étanche, par exemple par cimentage ou par une finition appropriée, et qu'il reste possible de les soumettre à cette précontrainte permanente qui leur évitera la formation de fissures sous l'influence des tensions de traction dues aux gradients thermiques.

Divers moyens peuvent être utilisés pour maintenir la matière céramique en état de compression.

Par exemple, le frettage peut également être réalisé en plaçant autour du corps creux, une chemise en tôle métallique perforée ou en métal déployé, placée à chaud.

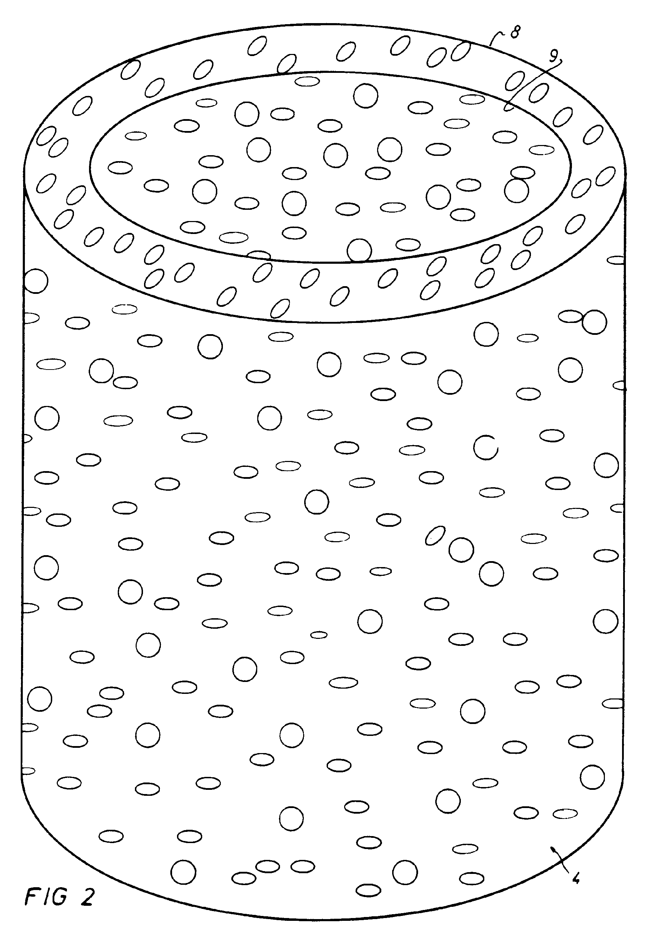

La Fig. 2 est une vue en perspective d'un brûleur 4 cylindrique constitué d'une matière céramique annulaire moulée d'une pièce, de sorte qu'il n'y a aucune interruption sur la paroi latérale.

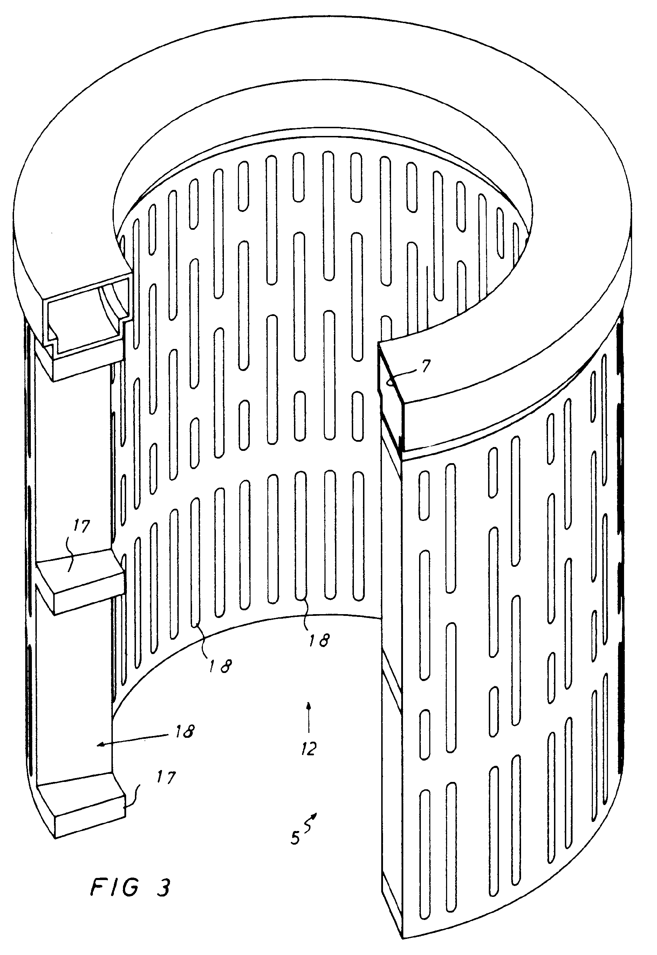

La Fig. 3 montre un échangeur métallique 5 pouvant être réalisé par moulage, muni extérieurement d'ailettes 17 et traversé par des chenaux 18 permettant aux gaz de combustion de s'écouler vers le passage central 12. Ce type d'échangeur peut comporter diverses extensions de surface (rainures, ailettes, etc.) susceptibles d'améliorer encore le transfert de chaleur.

On notera que l'on obtient d'emblée, en un seul passage des gaz de combustion sur les surfaces d'échange, un rendement en transfert de chaleur supérieur à 90%.

Le principe de la chaudière telle que décrite ci-dessus est adapté tant pour les chaudières à eau chaude domestiques et commerciales (de 10 à 500 kW) que pour les chaudières à vapeur de toute puissance.

A titre indicatif, il est possible de réaliser, suivant le principe de l'invention, une chaudière de 40 kW dont le brûleur ne dépasse pas les dimensions 150 mm de diamètre pour 200 mm de hauteur.

Suivant une forme de réalisation la chaudière selon l'invention est dotée d'un récupérateur de chaleur à tambour rotatif.

Ce récupérateur de chaleur est monté à l'intérieur du passage central 12 lui-même, ce qui permet un gain considérable de place.

En progressant de l'extérieur de la chaudière 1 vers son centre, on rencontre donc successivement l'enveloppe 2, l'espace d'alimentation 3, le brûleur céramique 4, la zone de combustion, l'échangeur de chaleur 5, le passage central 12 et le récupérateur de chaleur.

Ce récupérateur de chaleur comporte un tambour rotatif traversé longitudinalement par une multitude de canaux parallèles entre eux. Un tel tambour est avantageusement réalisé en une matière céramique non poreuse, facile à mouler et insensible aux agents corrosifs.

Une partie de la section de ce tambour est placée sur le trajet des gaz de combustion, une autre partie sur le trajet du gaz comburant (en l'occurrence de l'air). Ce tambour est entraîné en rotation lente par un moteur [22], de façon telle que les canaux réchauffés par les gaz de combustion permutent constamment et puissent céder leur chaleur au gaz comburant.

Le trajet des gaz au travers de la chaudière 1 s'établit donc comme suit : l'air pénètre dans le récupérateur, en passant par une partie des canaux du tambour où il se réchauffe. Cet air réchauffé (jusqu'à 150-200°C, par exemple) arrive au point où est introduit du gaz combustible. Les deux gaz se mélangent dans un passage de type venturi. Le mélange air-gaz se répartit dans l'enveloppe 2 de façon homogène, traverse le brûleur 4 de sa face externe 8 vers sa face interne 9, où a lieu la combustion. Les gaz de combustion traversent l'échangeur 5 et progressent vers le passage central 12, puis dans le tambour du récupérateur, dans les canaux, auquel ils abandonnent une partie de leur chaleur résiduelle, y compris la chaleur latente de condensation de l'eau, ce qui permet d'atteindre un rendement global proche de l'unité. Une sortie permet d'évacuer le condensat, cependant qu'un extracteur renvoie les fumées vers une cheminée externe.

On peut également envisager de placer à l'intérieur du passage central 12, plutôt qu'un récupérateur de chaleur, un dispositif de filtrage ou d'épuration catalytique des fumées.

On notera que le terme "gaz combustible" utilisé dans le présent brevet s'applique aussi bien à du gaz naturel qu'à des hydrocarbures gazéifiés et que le gaz comburant peut consister aussi bien en de l'air, de l'air enrichi d'oxygéne ou de l'oxygène pur.

## Revendications

1. Chaudière destinée à être alimentée en un mélange de gaz combustible et de gaz comburant, comportant, à l'intérieur d'une enveloppe (2), un brûleur (4) à combustion en surface en céramique poreuse et un échangeur de chaleur (5) dans lequel peut circuler un fluide caloporteur,
cette chaudière (1) étant pourvue de moyens (10, 11) pour alimenter en un mélange de gaz combustible et de gaz comburant un espace (3) ménagé entre l'enveloppe (2) et la face externe (8) du brûleur (4) à une pression supérieure à celle qui règne à la face interne du brûleur (4), l'échangeur de chaleur (5) étant disposé à l'intérieur du brûleur (4), un intervalle propre à la combustion du mélange de gaz combustible et de gaz comburant étant ménagé entre la face interne (9) du brûleur (4) et l'échangeur (5), un passage (12) pour l'évacuation des gaz de combustion étant ménagé à l'intérieur de l'échangeur (5),
cette chaudière étant caractérisée en ce que :
- le brûleur à combustion en surface (4) est constitué par un corps creux en matière céramique poreuse enserré par un frettage (16) qui maintient ladite matière céramique sous précontrainte en compression permanente dans les limites de température atteintes dans la chaudière.

2. Chaudière suivant la revendication 1, caractérisée en ce que la face externe de l'échangeur (5), dans son ensemble, est conformée sensiblement suivant la face interne du brûleur (4), l'intervalle entre ces faces respectives étant sensiblement constant.

3. Chaudière suivant l'une quelconque des revendications 1 et 2, caractérisée en ce que la paroi du corps creux constituant le brûleur (4) a une perméabilité comprise entre 80 et 120 mbar/m³.s⁻¹.m² et présente un rapport entre la surface des pores et la surface apparente de la matière comprise entre 15 et 25%.

4. Chaudière suivant l'une quelconque des revendications précédente, caractérisée en ce que le corps creux en matière céramique poreuse constituant le brûleur (4) est moulé d'une pièce;

5. Chaudière suivant l'une quelconque des revendications 1 à 3, caractérisée en ce que le corps creux constituant le brûleur (4) est forcé par l'assemblage de plusieurs éléments moulés distinctement et assemblés de façon étanche.

6. Chaudière suivant l'une quelconque des revendications précédentes, caractérisé en ce que le frettage (16) est constitué de bandes métalliques (16) serrées autour du corps creux (4).

7. Chaudière suivant l'une quelconque des revendications précédentes, caractérisée en ce que le frettage (16) est constitué d'une chemise métallique perforée.

8. Chaudière suivant l'une quelconque des revendications précédentes, caractérisée en ce que le brûleur (4) est en forme de cylindre creux.

9. Chaudière suivant la revendication 8, caractérisée en ce que l'échangeur de chaleur (5) est constitué de tubes (6) disposés suivant l'axe du brûleur (4), en cage d'écureuil, entre deux collecteurs annulaires (7) disposés dans des plans transversaux à l'axe du brûleur (4).

10. Chaudière suivant la revendication 8, caractérisée en ce que l'échangeur de chaleur (5) est constitué de tubes (6) enroulés en spirale, l'axe de chacun de ces tubes s'inscrivant sur une surface cylindrique.

11. Chaudière suivant la revendication 8, caractérisée en ce que l'échangeur (5) est un ensemble métallique coulé comportant des chenaux (18) pour le passage des gaz de combustion.

12. Chaudière suivant l'une quelconque des revendications précédentes, caractérisée en ce qu'elle est dotée d'un récupérateur de chaleur de type rotatif compact apte à collecter une partie de l'énergie thermique des gaz de combustion passant dans un conduit de fumée en préchauffant le gaz comburant du brûleur (4).

13. Chaudière suivant la revendication 9, caractérisée en ce que l'échangeur de chaleur (5) est fixé à l'enveloppe de la chaudière pour un de ses collecteurs annulaires, l'autre collecteur reposant librement sur un joint élastique solidaire de l'enveloppe de la chaudière et apte à reprendre les déplacements dus à la dilatation thermique axiale de cet échangeur.

## Patentansprüche

1. Mit einem Gemisch eines brennbaren und eines Sauerstoff enthaltenden Gases zu betreibender Heizkessel, welcher innerhalb einer Ummantelung (2,) einen aus poröser Keramik bestehenden Brenner (4) zur Oberflächenverbrennung und einen Wärmetauscher (5) aufweist, in welchem ein Wärmeträgerfluid zirkulieren kann, wobei der Heizkessel (1) mit Mitteln (10, 11) zur Versorgung eines zwischen der Ummantelung (2) und der Außenfläche (8) des Brenners (4) angeordneten Raumes (3) mit einem Gemisch eines brennbaren und eines Sauerstoff enthaltenden Gases mit einem Druck, der höher ist als der an der Innenfläche des Brenners (4) herrschende Druck versehen ist, der Wärmetauscher (5) im Innenraum des Brenners (4) angeordnet ist, ein zur Verbrennung des Gemischs eines brennbaren und eines Sauerstoff enthaltenden Gases geeigneter Zwischenraum zwischen der Innenfläche (9) des Brenners 14) und dem Wärmetauscher (5) vorhanden ist und sich im Innenraum des Wärmetauschers (5) ein Abzugskanal (12) für die Verbrennungsgase befindet, **dadurch gekennzeichnet**, daß der Brenner (4) zur Oberflächenverbrennung durch einen Hohlkörper aus porösem, keramischen Material gebildet ist, welcher von einer Umspannung (16) umgeben ist, die das keramische Material in den im Brenner erreichten Temperaturgrenzen unter ständiger Druckvorspannung hält.

2. Heizkessel nach Anspruch 1, **dadurch gekennzeichnet,** daß die Außenfläche des Wärmetauschers (5) insgesamt im wesentlichen entsprechend der Innenfläche des Brenners (4) ausgebildet ist, wobei der Abstand zwischen diesen beiden Flächen im wesentlichen konstant ist.

3. Heizkessel nach einem der Ansprüche 1 und 2, **dadurch gekennzeichnet**, daß die Wandung des den Brenner (4) bildenden Hohlkörpers eine Durchlässigkeit zwischen 80 und 120 mbar/m³.s⁻¹.m² hat und das Verhältnis der freiliegenden Fläche der poren zur äußeren Oberfläche des Materials zwischen 15 und 25 % beträgt.

4. Heizkessel nach einem der vorhergehenden Ansprüche, **dadurch gekennzeichnet,** daß der den Brenner (4) bildende Hohlkörper aus porösem, keramischen Material in einem Stück geformt ist.

5. Heizkessel nach einem der Ansprüche 1 bis 3, **dadurch gekennzeichnet,** daß der den Brenner (41 bildende Hohlkörper durch dichtes Zusammenfügen mehrerer einzeln geformter Teile gebildet ist.

6. Heizkessel nach einem der vorhergehenden Ansprüche, **dadurch gekennzeichnet,** daß die Umspannung (16) aus Metallbändern (16) besteht, welche um den Hohlkörper (4) gespannt sind.

7. Heizkessel nach einem der vorhergehenden Ansprüche, **dadurch gekennzeichnet**, daß die Umspannung (16) aus einer perforierten metallischen Umkleidung besteht.

8. Heizkessel nach einem der vorhergehenden Ansprüche, **dadurch gekennzeichnet,** daß der Brenner (4) eine hohlzylindrische Form hat.

9. Heizkessel nach Anspruch 8, **dadurch gekennzeichnet**, daß der Wärmetauscher (5) aus entsprechend der Achse des Brenners (4) nach Art eines Käfigankers angeordneten Rohren (6) besteht, die sich zwischen zwei ringförmigen, in Querebenen der Achse des Brenners (4) liegenden Sammlern (7) erstrecken.

10. Heizkessel nach Anspruch 8, **dadurch gekennzeichnet,** daß der Wärmetauscher (5) aus schraubenförmig gekrümmten Rohren (6) besteht, wobei die Achse jedes dieser Rohre auf einer zylindrischen Fläche liegt.

11. Heizkessel nach Anspruch 8, **dadurch gekennzeichnet**, daß der Wärmetauscher (5) ein metallisches Gußstück mit kleinen Kanälen (18) für den Durchlaß der Verbrennungsgase ist.

12. Heizkessel nach einem der vorhergehenden Ansprüche, **dadurch gekennzeichnet,** daß er mit einer kompakten, rotierenden Vorrichtung zur Wärmerückgewinnung versehen ist, welche einen Teil der Wärmeenergie der durch einen Rauchkanal strömenden Verbrennungsgase auffängt, indem sie das Sauerstoff enthaltende Gas des Brenners (4) vorwärmt.

13. Heizkessel nach Anspruch 9, **dadurch gekennzeichnet,** daß der Wärmetauscher (5) mit einem seiner Sammler an der Ummantelung des Heizkessels befestigt ist, während der andere Sammler frei auf einer elastischen Verbindung ruht, welche mit der Ummantelung des Heizkessels verbunden und so ausgelegt ist, daß sie die Verlagerungen infolge axialer Wärmedehnung des Wärmetauschers aufnehmen kann.

## Claims

1. Boiler intended to be fed with a mixture of fuel gas and oxidant gas, comprising, inside a housing (2), a surface combustion burner (4) made of porous ceramic and a heat exchanger (5) in which a coolant fluid may flow,
this boiler (1) being provided with means (10, 11) for feeding with a mixture of fuel gas and oxidant gas a space (3) made between the housing (2) and the external face (8) of the burner (4) at a pressure greater than that which prevails at the internal face of the burner (4), the heat exchanger (5) being located inside the burner (4), an interval suitable for the combustion of the mixture of fuel gas and oxidant gas being made between the internal face (9) of the burner (4) and the exchanger (5), a passage (12) for removal of the combustion gases being made inside the exchanger (5),
this boiler being characterised in that:
- the surface combustion burner (4) consists of a hollow body made of a porous ceramic material enclosed by a reinforcement (16) which holds the said ceramic material under a permanent compressive prestress within the temperature limits reached in the boiler.

2. Boiler according to Claim 1, characterised in that the external face of the exchanger (5), in its entirety, is shaped substantially according to the internal face of the burner (4), the interval between these respective faces being substantially constant.

3. Boiler according to either of Claims 1 and 2, characterised in that the wall of the hollow body constituting the burner (4) has a permeability between 80 and 120 mbar/m³.s⁻¹.m² and has a ratio between the surface area of the pores and the apparent surface of the material which is between 15 and 25%.

4. Boiler according to any one of the preceding claims, characterised in that the hollow body made of a porous ceramic material constituting the burner (4) is moulded in a single piece.

5. Boiler according to any one of Claims 1 to 3, characterised in that hollow body constituting the burner (4) is formed by the assembly of several separately moulded elements which are assembled in a leaktight manner.

6. Boiler according to any one of the preceding claims, characterised in that the reinforcement (16) consists of metal bands (16) clamped around the hollow body (4).

7. Boiler according to any one of the preceding claims, characterised in that the reinforcement (16) consists of a perforated metal jacket.

8. Boiler according to any one of the preceding claims, characterised in that the burner (4) is of hollow cylindrical shape.

9. Boiler according to Claim 8, characterised in that the heat exchanger (5) consists of tubes (6) located along the axis of the burner (4), in a squirrel-cage arrangement, between two annular manifolds (7) located in planes which are transverse to the axis of the burner (4).

10. Boiler according to Claim 8, characterised in that the heat exchanger (5) consists of tubes (6) wound in a spiral arrangement, the axis of each of these tubes being inscribed on a cylindrical surface.

11. Boiler according to Claim 8, characterised in that the exchanger (5) is a cast metal assembly comprising channels (18) for the combustion gases to pass.

12. Boiler according to any one of the preceding claims, characterised in that it is provided with a heat recuperator of the compact rotary type capable of collecting a proportion of the heat energy from the combustion gases passing through a smoke conduit while preheating the oxidant gas of the burner (4).

13. Boiler according to Claim 9, characterised in that the heat exchanger (5) is fixed to the housing of the boiler by one of its annular manifolds, the other manifold resting freely on an elastic seal integral with the housing of the boiler and capable of taking up the displacements due to the axial thermal expansion of this exchanger.
